# EUROPÄISCHE PATENTSCHRIFT

(11) **EP 4 684 438 B1**
(45) Veröffentlichungstag und Bekanntmachung des Hinweises auf die Patenterteilung: **01.07.2026**
(21) Anmeldenummer: 24712093.4
(22) Anmeldetag: 21.03.2024
(51) Int. Cl.: H01M 6/52, H01M 10/54, B09B 3/00, B09B 3/40, B09B 3/35, B09B 101/16

(54) **VERFAHREN UND VORRICHTUNG ZUR VERWERTUNG EINER BATTERIE**
METHOD FOR RECYCLING A BATTERY
PROCÉDÉ DE RECYCLAGE D'UNE BATTERIE

(30) Priorität: 22.03.2023 EP 23163520
(43) Veröffentlichungstag der Anmeldung: 28.01.2026
(73) Patentinhaber: ERMAFA Environmental Technologies GmbH, 1110 Wien (AT)
(72) Erfinder: Pölzlbauer, Karl Peter, 1110 Wien (AT)
(74) Vertreter: SONN Patentanwälte GmbH & Co KG
(86) Internationale Anmeldenummer: PCT/EP2024/057557
(87) Internationale Veröffentlichungsnummer: WO 2024/194400

(56) Entgegenhaltungen:
- EP-B1- 3 529 841
- CN-A- 113 477 684
- CN-A- 114 583 305

## Beschreibung

Die vorliegende Erfindung betrifft ein Verfahren und eine mobile Vorrichtung zur Verwertung einer Batterie. Weiters betrifft die Erfindung eine Verpackung, in welcher 1 bis 30 kg Batterieteile enthalten sind.

Verfahren und Vorrichtungen zur Verwertung von Batterien, insbesondere Altbatterien, sind im Stand der Technik bekannt.

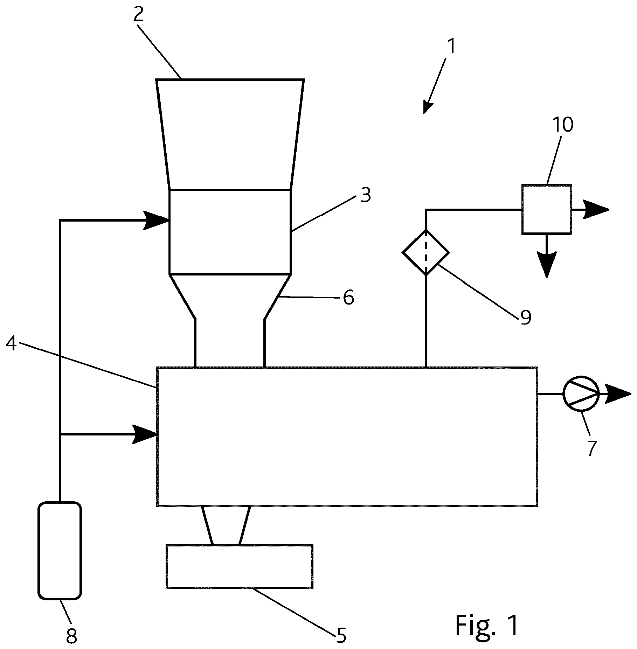

So wird in der CN 113 477 684 A eine mobile Recyclingvorrichtung für Lithiumbatterien offenbart. Die Lithiumbatterien werden in die in Fig. 1 des Dokuments gezeigte Zerkleinerungseinheit D zugeführt, die mit sauerstofffreiem Wasser gefüllt ist; somit können die Lithiumbatterien unter Wasser in einer nicht explosiven Atmosphäre zerkleinert werden. Die zerkleinerten Batterieteile werden dann durch eine Förderschnecke E aus der Zerkleinerungseinheit D gefördert und gelangen zu einer Trocknungseinheit F, in welcher sie getrocknet werden.

Die CN 114 583 305 A betrifft eine Vorrichtung zum Recyceln von Lithiumbatterien. Gemäß Fig. 1 des Dokuments weist die Vorrichtung Entladungsbehälter mit je einem Siebeinsatz auf. Die Entladungsbehälter sind mit einer wässrigen Lösung von Natriumchlorid gefüllt. Die Lithiumbatterien werden zur Entladung in der Lösung eingeweicht, indem sie im Siebeinsatz untergebracht werden. Nach Entladung der Lithiumbatterien werden diese durch Rotation des Siebeinsatzes vorgetrocknet und dann in einer ersten Zerkleinerungseinheit zu Stücken mit einer Größe von 20x30 mm zerkleinert. Anschließend werden die Batterieteile mittels eines Förderbands zu einer Trocknungseinheit überführt und dort weiter getrocknet. Die getrockneten Batterieteile werden danach in einer zweiten Zerkleinerungseinheit in Partikel mit einer Größe von 16 mm zerkleinert und in ihre Bestandteile aufgetrennt.

Die EP 3 312 922 A1 beschreibt ein Verfahren und eine Anlage zur Verwertung gebrauchter Batterien. Die Batterien werden zunächst in einer Entladungseinheit entladen. Anschließend werden sie einer Zerkleinerungseinheit zugeführt, wo sie unter Schutzgas zerkleinert werden. Nach der Zerkleinerung werden die erhaltenen Batterieteile mit einem ersten gasdichten Förderer zu einer Trocknungseinheit gefördert. Währen der Trocknung der Batterieteile wird ein Elektrolyt abgetrennt. Die getrockneten, inaktivierten Batterieteile werden anschließend mit einem zweiten Förderer zu einer Verpackungseinheit gefördert, wo sie in einen Transportbehälter abgefüllt werden.

Die EP 3 529 841 B1 betrifft eine Batterieverarbeitungsanlage, aufweisend eine Entladeeinheit, eine Demontagestation, eine Zerkleinerungseinheit, eine Trockenvorrichtung und eine Abfüllvorrichtung. Es besteht ein Bedarf an einer weiteren Erhöhung der Flexibilität von Verfahren und Vorrichtungen zur Verwertung von Batterien. Eine Aufgabe der vorliegenden Erfindung ist die Bereitstellung eines solchen flexiblen Verfahrens und einer solchen flexiblen Vorrichtung.

Diese Aufgabe wird erfindungsgemäß dadurch gelöst, dass das Verfahren zur Verwertung einer Batterie die folgenden Schritte umfasst:
(a) Bereitstellen einer zumindest teilweise entladenen Batterie,
(b) Zerkleinern der zumindest teilweise entladenen Batterie in einem Prozessraum, um Batterieteile zu erhalten,
(c) Trocknen der Batterieteile in einem Prozessraum, um getrocknete Batterieteile und ein abgetrenntes Gas zu erhalten, und
(d) Verpacken der getrockneten Batterieteile in eine Verpackung,
dadurch gekennzeichnet, dass die Schritte (b) und (c) im selben Prozessraum mit einheitlicher Atmosphäre durchgeführt werden, wobei im Prozessraum eine Schutzatmosphäre vorgesehen ist, wobei die Schutzatmosphäre zumindest 85 Vol% eines inerten Gases, bezogen auf das Gesamtvolumen der Schutzatmosphäre, umfasst.

Durch das Durchführen des Zerkleinerns und des Trocknens im selben Prozessraum kann das Verfahren vereinfacht und sehr effizient gestaltet werden, da eine Einstellung von Prozessparametern (z.B. Druck, Temperatur) nur für diesen einen Prozessraum ausreichend ist. Weiters kann das Trocknen unmittelbar nach dem Zerkleinern erfolgen. Dies hat den Vorteil, dass eine zwischengelagerte Menge an noch nicht getrockneten Batterieteilen verringert werden kann, bzw. dass eine Zwischenlagerung gar nicht erst erforderlich ist. Eine Zwischenlagerung noch nicht getrockneter Batterieteile ist in prozesstechnischer Hinsicht aufwändig, da aus solchen Batterieteilen ein gesundheitsschädlicher, brennbarer Dampf austreten kann, und diese Batterieteile daher unter kontrollierten Bedingungen gelagert werden müssen. Vorzugsweise wird mit dem Trocknen innerhalb von 10 min nach einer Beendigung des Zerkleinerns begonnen, bevorzugter innerhalb von 3 min, besonders bevorzugt innerhalb von 1 min.

Die in Schritt (a) bereitgestellte Batterie weist vorzugsweise eine Spannung von 2,5 V pro Zelle oder darunter auf, bevorzugter 1 V pro Zelle oder darunter, besonders bevorzugt 0,1 V pro Zelle oder darunter. Hierfür kann die Batterie vor Schritt (a) zumindest teilweise entladen werden. Die Messung der Spannung kann mittels eines Voltmeters in Reihenschaltung durchgeführt werden. Falls das zumindest teilweise Entladen nicht bereits erfolgt ist (z.B. durch eine vorhergehende bestimmungsgemäße Verwendung der Batterie), kann durch das in das Verfahren integrierte Entladen die Betriebs- und Prozesssicherheit der nachfolgenden Schritte des Verfahrens verbessert werden, insbesondere kann die Gefahr einer thermischen Überlastung durch einen Kurzschluss, wodurch es zum Entstehen eines Brands oder dem spontanen Entzünden einer entzündlichen Atmosphäre kommen könnte, reduziert werden.

Die in Schritt (a) bereitgestellte Batterie kann durch Zerlegen eines Batteriemoduls oder eines Batteriepacks erhalten werden. Unter einem Batteriemodul wird dabei die Kombination von zwei oder mehr Batterien verstanden. Unter einem Batteriepack wird die Kombination von zwei oder mehr Batteriemodulen verstanden, auch ein Batteriesystem (ähnlich einem Batteriepack, kann aber zusätzliche Komponenten aufweisen, z.B. ein Kühlungs- und/oder Managementsystem) ist im Rahmen dieser Anmeldung als von einem Batteriepack umfasst anzusehen. Bevorzugt ist es, wenn das Zerlegen nach einem Entladen der Batterie erfolgt. Das Batteriemodul bzw. der Batteriepack kann sich dann in einem spannungsfreien bzw. zumindest spannungsarmen Zustand befinden, was sicherheitstechnisch vorteilhaft sein kann.

Vor dem Zerkleinern kann ein Gehäuse der Batterie geöffnet werden. Dadurch kann das nachfolgende Trocknen der zerkleinerten Batterieteile effizienter durchgeführt werden, da das Gas einfacher abgetrennt werden kann.

Im Prozessraum ist eine Schutzatmosphäre vorgesehen. Unter einer Schutzatmosphäre wird eine Atmosphäre mit einem kontrollierten Druck, einer kontrollierten Temperatur und einer kontrollierten Zusammensetzung verstanden. Damit können das Zerkleinern und das Trocknen kontrolliert, sicher und reproduzierbar durchgeführt werden. Die Schutzatmosphäre kann mittels eines fraktionierten Vakuumverfahrens hergestellt werden. Dadurch kann die Schutzatmosphäre rasch aufgebaut werden.

Die Schutzatmosphäre umfasst zumindest 85 Vol% eines inerten Gases, bevorzugter zumindest 95 Vol%, besonders bevorzugt zumindest 98 Vol%, bezogen auf das Gesamtvolumen der Schutzatmosphäre. Das inerte Gas umfasst bevorzugt Stickstoff, da hiermit eine Explosion oder Entzündung der Batterieteile gut vermieden werden kann.

Bevorzugt liegt ein Wasserpartialdruck der Schutzatmosphäre bei 100 Pa oder darunter, bevorzugt bei 70 Pa oder darunter, besonderes bevorzugt bei 50 Pa oder darunter. Dadurch kann die Zersetzung von Bestandteilen der Batterie, insbesondere Hexafluorophosphat, vermieden werden, und damit einhergehend die Bildung von Lithium-Hydroxid-Verbindungen oder Fluor-Wasserstoffverbindungen.

Weiters ist es bevorzugt, wenn ein Sauerstoffpartialdruck der Schutzatmosphäre bei 100 mbar oder darunter liegt, bevorzugter bei 50 mbar oder darunter, besonders bevorzugt bei 30 mbar oder darunter. Dadurch kann nicht nur die Korrosion der Komponenten der erfindungsgemäßen Vorrichtung reduziert werden, sondern auch die Neigung zur Bildung von molekularem Wasserstoff, der gemeinsam mit Sauerstoff eine zündfähige Atmosphäre bilden könnte, kann verringert werden.

In Schritt (b) des Verfahrens wird die zumindest teilweise entladene Batterie im Prozessraum zerkleinert, um Batterieteile zu erhalten. Dadurch kann die spezifische freie Oberfläche der Batterie vergrößert werden, was die Effizienz der nachfolgenden Verfahrensschritte erhöhen kann.

Das Zerkleinern kann unter Vakuum durchgeführt werden, vorzugsweise bei einem Druck im Prozessraum von 100 mbar oder darunter, bevorzugter bei 50 mbar oder darunter, besonders bevorzugt bei einem Druck im Bereich von 10 bis 50 mbar. Dadurch kann ein Druck, der nachfolgend für das Trocknen verwendet werden kann, bereits vor dem Zerkleinern eingestellt werden, sodass das Trocknen effizient erfolgen kann.

Alternativ kann das Zerkleinern bei Normaldruck im Prozessraum durchgeführt werden. Unter einem Normaldruck wird ein Druck im Bereich von 1 bis 1,1 bar verstanden. Ein für das Trocknen verwendeter Druck kann dann nach Schritt (b) oder auch schon währenddessen eingestellt werden. So kann insbesondere dann vorgegangen werden, wenn der Prozessraum nach Schritt (b) verkleinert wird, wie weiter unten beschrieben.

Das Zerkleinern kann bei einer Temperatur von 20 bis 200 °C im Prozessraum durchgeführt werden. Vorzugsweise wird das Zerkleinern bei 20 bis 30 °C durchgeführt. Dadurch kann das Verfahren energieeffizienter durchgeführt werden. Wird eine feuchte Batterie bereitgestellt, kann es hingegen vorteilhaft sein, die Temperatur beim Zerkleinern zu erhöhen, sodass in der Batterie enthaltenes Wasser verdampfen kann. Vorzugsweise erfolgt das Zerkleinern dann bei einer Temperatur von 40 °C oder darüber, bevorzugter bei 60 °C oder darüber, noch bevorzugter bei einer Temperatur im Bereich von 90 bis 200 °C, besonders bevorzugt von 90 bis 150 °C.

Die Batterieteile weisen vorzugsweise einen Durchmesser oder eine maximale Ausdehnung (z.B. eine maximale Länge) von 100 mm oder darunter auf, bevorzugter 50 mm oder darunter, besonders bevorzugt 20 mm oder darunter. Dies kann aufgrund der großen spezifischen freien Oberfläche der Batterieteile nicht nur die Effizienz der Trocknung maßgeblich erhöhen, sondern auch das nachfolgende Verpacken der Batterieteile verbessern. Auch kann dadurch eine Weiterverarbeitung der Batterieteile, insbesondere eine metallurgische Aufbereitung, um Rohstoffe zu gewinnen, vereinfacht werden.

Der Prozessraum kann nach Schritt (b) verkleinert werden. Für diese Zwecke kann eine Trennvorrichtung im Prozessraum angeordnet sein. Dann braucht beim nachfolgenden Trocknen nicht mehr der gesamte Prozessraum beheizt werden und/oder unter Vakuum betrieben werden, und die Schutzatmosphäre braucht nicht mehr im gesamten Prozessraum aufrechterhalten werden. Eine Verkleinerung des Prozessraums kann nicht nur hinsichtlich des Energieverbrauchs vorteilhaft sein, sondern auch das Trocknen kann schneller und gleichmäßiger erfolgen, weil der verbleibende Prozessraum schneller auf eine bestimmte Temperatur und/oder einen bestimmten Druck gebracht werden kann.

In Schritt (c) des Verfahrens werden die Batterieteile im Prozessraum getrocknet, um getrocknete Batterieteile und ein abgetrenntes Gas zu erhalten. Das abgetrennte Gas kann über einen Filter abgezogen werden, bevorzugt über einen Brüdenfilter.

Das Trocknen in Schritt (c) kann unter Vakuum im Prozessraum durchgeführt werden, vorzugsweise bei einem Druck von 100 mbar oder darunter, bevorzugter bei 50 mbar oder darunter, besonders bevorzugt bei einem Druck im Bereich von 10 bis 50 mbar. Dadurch kann ein Dampfdruck des abzutrennenden Gases, insbesondere des Elektrolyten, unterschritten werden.

Wird Schritt (c) unter Vakuum durchgeführt, kann zum Erzeugen des Vakuums im Prozessraum eine Vakuumpumpe in einem Hysteresemodus betrieben werden. Dadurch kann der Druck im Prozessraum rasch reduziert werden. Auch kann dadurch eine Einschaltdauer der Vakuumpumpe verringert werden. Unter einem "Hysteresemodus" wird ein Betriebsmodus der Vakuumpumpe verstanden, in welchem die Leistung der Vakuumpumpe zwischen einen Minimalwert und einem Maximalwert alterniert. Vorzugsweise alterniert die Leistung der Vakuumpumpe zwischen 0 und 150 kW, bevorzugter zwischen 0 und 100 kW, besonders bevorzugt zwischen 0 und 60 kW.

Vorzugsweise erfolgt das Trocknen in Schritt (c) bei einer Temperatur im Prozessraum von 60 °C oder darüber, bevorzugt bei einer Temperatur im Bereich von 90 bis 200 °C. Dadurch kann die Trocknung effizient ablaufen, und die Gefahr einer Zersetzung von in den zerkleinerten Batterieteilen enthaltenen Komponenten kann geringgehalten werden.

Bevorzugt erfolgt das Trocknen in Schritt (c) bei einer Temperatur im Prozessraum im Bereich von 90 bis 200 °C und einem Druck von 50 mbar oder darunter. Dadurch kann sichergestellt werden, dass der Dampfdruck des abzutrennenden Gases, insbesondere des Elektrolyten, unterschritten wird, was eine effektive und schnelle Abtrennung von den zerkleinerten Batterieteilen ermöglicht.

Vorzugsweise enthält die bereitgestellte Batterie einen Elektrolyten, der im abgetrennten Gas zumindest teilweise enthalten ist. Ein Siedepunkt bzw. ein oberes Ende eines Siedebereichs des in der Batterie enthaltenen Elektrolyten liegt bei einem Druck von 10 mbar vorzugsweise bei 180 °C oder darunter, bevorzugter bei 150 °C oder darunter, besonders bevorzugt bei 130 °C oder darunter. Dadurch kann der Elektrolyt beim Trocknen in Schritt (c) effizient und möglichst vollständig abgetrennt werden. Dadurch kann die Batterie inaktiviert werden, und eine nachfolgende elektrochemische Reaktion und das Entstehen eines explosiven Gasgemischs können vermieden werden. Vorzugsweise liegt nach Schritt (c) ein verbleibender Anteil des Elektrolyten in den Batterieteilen bei 0,1 Gew% oder darunter, bevorzugt bei 0,01 Gew% oder darunter, besonders bevorzugt bei 0,002 Gew% oder darunter, bezogen auf das Gesamtgewicht der Batterieteile.

Vorzugsweise wird das Verpacken in Schritt (d) im selben Prozessraum durchgeführt wie die Schritte (b) und (c). Dadurch kann das Verpacken der getrockneten Batterieteile in einer kontrollierten Umgebung durchgeführt werden. Beispielsweise können ein Kondensieren von Wasserdampf auf den Batterieteilen und/oder eine Verunreinigung der Batterieteile vor dem Verpacken vermieden werden.

Das Verpacken kann unter Normaldruck durchgeführt werden. Jedoch kann, wenn Schritt (d) im selben Prozessraum durchgeführt wird wie die Schritte (b) und (c), ein im Prozessraum beim Trocknen vorherrschender Druck auch für das Verpacken beibehalten werden. Dadurch kann die Atmosphäre im Prozessraum konstant gehalten werden.

Die getrockneten Batterieteile können in einer kunststoffhaltigen Verpackung verpackt werden, vorzugsweise in einer Barriereverpackung. Dadurch können die Batterieteile gasdicht und/oder wasserdicht verpackt werden. Vorzugsweise werden die Batterieteile so verpackt, dass das Entstehen einer zündfähigen Atmosphäre für mindestens vier Wochen bei einer Temperatur von 50 °C und Normaldruck ausgeschlossen ist.

Die getrockneten Batterieteile können in einer Vakuumverpackung verpackt werden. Die Verpackung kann auch verschweißt werden. Dadurch können die Batterieteile besonders gut vor Umwelteinflüssen geschützt werden.

Die getrockneten Batterieteile werden in Schritt (d) vorzugsweise zu je 1 bis 30 kg verpackt, vorzugsweise zu je 1 bis 25 kg, bevorzugter zu je 1 bis 20 kg. Dadurch können die verpackten Batterieteile von einer Person einfach getragen und transportiert werden, was die Flexibilität des Verfahrens weiter verbessert.

Das Verfahren kann einen weiteren Schritt (e) umfassen: Abtrennen eines Elektrolyten vom abgetrennten Gas. Bevorzugt liegt der Anteil des Elektrolyten am Gesamtgewicht des Gases bei 50 Gew% oder darüber, bevorzugter bei 70 Gew% oder darüber, besonders bevorzugt bei 90 Gew% oder darüber.

Der Elektrolyt kann durch Kondensation vom Gas abgetrennt werden. Hierfür wird das abgetrennte Gas vorzugsweise auf eine Temperatur von 30 °C oder darunter abgekühlt, bevorzugt auf 15 °C oder darunter, besonders bevorzugt auf 5 °C oder darunter. Der Anteil des abgetrennten und somit rückgewonnenen Elektrolyten liegt vorzugsweise bei 95 Gew% oder darüber, bevorzugter bei 99 Gew% oder darüber, bezogen auf das Gesamtgewicht des in der bereitgestellten Batterie enthaltenen Elektrolyten. Dadurch kann das Verfahren erheblich zur Kreislaufwirtschaft und Nachhaltigkeit beitragen.

Nach Schritt (e) kann das abgetrennte Gas gereinigt werden. Dabei können saure Bestandteile des Gases, etwa Fluorwasserstoff und/oder Phosphorpentafluorid, zumindest teilweise entfernt werden. Diese Bestandteile können weiteren Verwendungen zugeführt werden.

Nach Schritt (e) kann ein im abgetrennten Gas enthaltener Stickstoff zumindest teilweise abgetrennt werden. Der abgetrennte Stickstoff kann im Verfahren für die Schutzatmosphäre umfassend ein inertes Gas verwendet werden, wenn die Schritte (b), (c), und ggf. (d), unter einer solchen Schutzatmosphäre durchgeführt werden. Vor der Rückführung in das Verfahren kann der Stickstoff gereinigt werden, insbesondere, um einen Rest des Elektrolyten davon abzutrennen.

Die Erfindung betrifft weiters eine mobile Vorrichtung zur Verwertung einer Batterie mit dem erfindungsgemäßen Verfahren, aufweisend
eine Aufgabeeinheit zum Aufgeben der zumindest teilweise entladenen Batterie,
eine Zerkleinerungseinheit zum Zerkleinern der zumindest teilweise entladenen Batterie,
eine Trocknungseinheit zum Trocknen der Batterieteile, und
eine Verpackungseinheit zum Verpacken der getrockneten Batterieteile,
dadurch gekennzeichnet, dass die Zerkleinerungseinheit und die Trocknungseinheit im selben Prozessraum mit einheitlicher Atmosphäre angeordnet sind, wobei im Prozessraum eine Schutzatmosphäre vorgesehen ist, wobei die Schutzatmosphäre zumindest 85 Vol% eines inerten Gases, bezogen auf das Gesamtvolumen der Schutzatmosphäre, umfasst.

Unter einer "mobilen Vorrichtung" wird in dieser Anmeldung eine Vorrichtung verstanden, die mit einem Lastkraftwagen, insbesondere einem Sattelkraftfahrzeug gemäß der Richtlinie 96/53/EG des Rates vom 25. Juli 1996, transportierbar und daher flexibel örtlich einsetzbar ist.

Die mobile Vorrichtung kann eingerichtet sein, in einem Container untergebracht zu werden. Der erfindungsgemäß verwendete Container kann ein Container nach der Norm ISO 668:2020-01 sein. Ein genormter Container kann unkompliziert transportiert werden, etwa mit einem LKW, einem Güterzug oder einem Frachtschiff. Vorzugsweise ist der Container ein 40-Fuß-Container, bevorzugter ein 20-Fuß-Container, besonders bevorzugt ein 10-Fuß-Container. Unter einem 40-Fuß-Container wird ein Container mit ungefähr 12,2 m Länge, 2,4 m Breite und 2,6 m Höhe verstanden. Unter einem 20-Fuß-Container wird ein Container mit ungefähr 6,1 m Länge, 2,4 m Breite und 2,6 m Höhe verstanden. Unter einem 10-Fuß-Container wird ein Container mit ungefähr 3 m Länge, 2,4 m Breite und 2,6 m Höhe verstanden.

Der Container kann unter einem geringen Zeitaufwand, insbesondere innerhalb von 8 h oder weniger, verladen werden, und nachfolgend an einen anderen Einsatzort transportiert werden, wo er ebenfalls unter einem geringen Zeitaufwand, insbesondere innerhalb von 8 h oder weniger, in einen einsatzfähigen Zustand gebracht werden kann. Weiters wird erfindungsgemäß kein spezielles Fundament, etwa eine Einhausung in Form einer Halle, benötigt. Die Erfindung ermöglicht somit einen unkomplizierten und flexiblen Einsatz des Verfahrens je nach Bedarf, um eine Batterie, insbesondere eine Altbatterie, direkt an Ort und Stelle zu verwerten. Das Verfahren kann auch direkt im Container durchgeführt werden. Dann kann die mobile Vorrichtung auch während der Durchführung des Verfahrens im Container untergebracht sein, was die Flexibilität weiter verbessern kann, da ein Verladen und Entladen entfallen kann.

Im Prozessraum ist vorzugsweise eine Trennvorrichtung angeordnet, die eingerichtet ist, die Aufgabeeinheit und die Zerkleinerungseinheit von der Trocknungseinheit und der Verpackungseinheit zu trennen. Die Trennvorrichtung kann eine Tür aufweisen, insbesondere eine Schiebetür oder eine Klapptür. Durch das Vorsehen der Trennvorrichtung können gewisse Prozessabläufe vereinfacht bzw. effizienter gestaltet werden. Beispielsweise kann die Trennvorrichtung geschlossen werden, nachdem die Batterieteile der Trocknungseinheit zugeführt wurden. Dann braucht beim Trocknen nicht mehr der gesamte Prozessraum beheizt werden und/oder unter Vakuum betrieben werden, und die Schutzatmosphäre braucht nicht mehr im gesamten Prozessraum aufrechterhalten werden. Auch können Prozessparameter (z.B. Druck, Temperatur) in der Trocknungseinheit dann schneller eingestellt werden.

Die Trennvorrichtung kann ein feuerfestes Material umfassen, vorzugsweise Stahl und/oder Aluminium. Falls es zu einem spontanen Entzünden oder einer thermischen Überlastung während des Verfahrens kommt, kann die Trennvorrichtung geschlossen werden, sodass ein Schaden räumlich begrenzt werden kann.

Die mobile Vorrichtung weist vorzugsweise eine Einheit zum Einspeisen eines inerten Gases in den Prozessraum auf. Das inerte Gas kann in einem Behälter vorgesehen sein, wobei der Behälter über eine Leitung mit dem Prozessraum verbunden sein kann, um das inerte Gas über eine Einlassöffnung oder über mehrere Einlassöffnungen in den Prozessraum einzuspeisen. Vorzugsweise sind zwei Einlassöffnungen vorgesehen, um das inerte Gas in den Prozessraum einzuspeisen, wobei die Einspeisung des inerten Gases bevorzugt über eine erste Einlassöffnung in die Zerkleinerungseinheit und über eine zweite Einlassöffnung in die Trocknungseinheit erfolgt.

An den Prozessraum ist vorzugsweise eine Vakuumpumpe zum Aufbau einer Schutzatmosphäre angeschlossen. Da die Zerkleinerungseinheit und die Trocknungseinheit im selben Prozessraum angeordnet sind, kann eine Vakuumpumpe ausreichend sein, um einen bestimmten Druck zu erzeugen. Je nach Leistung der Vakuumpumpe können auch zwei oder mehr Vakuumpumpen verwendet werden.

Die Zerkleinerungseinheit kann eine Rotorschere aufweisen. Diese eignet sich gut zum Zerkleinern sperriger Stoffe, wie Batterien.

Die Trocknungseinheit kann einen Schaufeltrockner aufweisen. Dabei kann es sich um einen Schaufeltrockner handeln. Dieser kann horizontal oder vertikal angeordnet sein. Dadurch können die Batterieteile gut durchmischt und somit gleichmäßig getrocknet werden.

Die Trocknungseinheit kann einen Filter zum Abziehen des Gases aufweisen. Der Filter ist vorzugsweise ein Brüdenfilter. Dadurch kann nicht nur das Gas effizient abgezogen werden, sondern können auch Staubpartikel abgeschieden und somit aus dem Prozessraum entfernt werden. Dem Filter kann ein Verdampfer nachgeschaltet sein, um den Elektrolyten durch Kondensation vom Gas abzutrennen.

Die Trocknungseinheit ist vorzugsweise ein Autoklav. Dadurch kann eine gute Gasdichtheit bereitgestellt werden.

Vorzugsweise ist die Trocknungseinheit unterhalb von der Zerkleinerungseinheit angeordnet. Dann können die Batterieteile schwerkraftsbedingt von der Zerkleinerungseinheit in die Trocknungseinheit fallen, sobald Schritt (b) abgeschlossen ist. Somit fallen keine noch nicht getrockneten Batterieteile an, die zwischengelagert werden müssten. Auch kann die Größe des Prozessraums dadurch geringgehalten werden, da keine Transportvorrichtung (z.B. Förderer) vorgesehen werden muss, um die Batterieteile von der Zerkleinerungseinheit zur Trocknungseinheit zu transportieren. Die räumliche Anordnung ("unterhalb") bezieht sich auf den bestimmungsgemäßen Betriebszustand der mobilen Vorrichtung.

Vorzugsweise ist die Verpackungseinheit unterhalb von der Trocknungseinheit angeordnet. Dann können die getrockneten Batterieteile schwerkraftsbedingt von der Trocknungseinheit in die Verpackungseinheit fallen, sobald Schritt (c) abgeschlossen ist. Das Verfahren kann somit noch effizienter gestaltet werden, da keine Transportvorrichtung (z.B. Förderer) vorgesehen werden muss, um die Batterieteile von der Trocknungseinheit zur Verpackungseinheit zu transportieren. Wenn die Verpackungseinheit im selben Prozessraum angeordnet ist wie die Zerkleinerungseinheit und die Trocknungseinheit, kann durch diese Anordnung die Größe des Prozessraums geringgehalten werden.

Die mobile Vorrichtung kann weiters eine Entladungseinheit zum zumindest teilweise Entladen der Batterie aufweisen, wobei die Entladungseinheit vor der Aufgabeeinheit angeordnet ist. Falls das zumindest teilweise Entladen nicht bereits erfolgt ist (z.B. durch eine vorhergehende bestimmungsgemäße Verwendung der Batterie), kann durch die Entladungseinheit die Betriebs- und Prozesssicherheit der nachfolgenden Schritte des Verfahrens verbessert werden.

Die mobile Vorrichtung kann weiters eine Demontageeinheit zum Zerlegen eines Batteriemoduls oder eines Batteriepacks aufweisen, wobei die Demontageeinheit vor der Aufgabeeinheit angeordnet ist. Wenn die mobile Vorrichtung eine Entladungseinheit aufweist, ist die Demontageeinheit der Entladungseinheit vorzugsweise nachgeordnet. Das Batteriemodul bzw. der Batteriepack kann sich dann in einem spannungsfreien bzw. zumindest spannungsarmen Zustand befinden, was sicherheitstechnisch vorteilhaft sein kann.

Die Erfindung betriff außerdem eine Verpackung, in welcher 1 bis 30 kg Batterieteile enthalten sind, erhältlich durch das erfindungsgemäße Verfahren. Vorzugsweise sind in der Verpackung 1 bis 25 kg Batterieteile in der Verpackung verpackt, bevorzugter 1 bis 20 kg. Die Verpackung kann somit von einer Person einfach getragen und transportiert werden.

Die verpackten Batterieteile weisen vorzugsweise einen Durchmesser oder eine maximale Ausdehnung von 100 mm oder darunter auf, bevorzugter 50 mm oder darunter, besonders bevorzugt 20 mm oder darunter. Dadurch kann aufgrund der großen spezifischen freien Oberfläche der Batterieteile eine Weiterverarbeitung, insbesondere eine metallurgische Aufbereitung zur Gewinnung von Rohstoffen, vereinfacht werden.

Die Batterieteile weisen vorzugsweise einen Anteil eines Elektrolyten von 0,1 Gew% oder darunter auf, bevorzugter 0,01 Gew% oder darunter, besonders bevorzugt 0,002 Gew% oder darunter, bezogen auf das Gesamtgewicht der Batterieteile. Dadurch kann eine sichere Handhabung erreicht werden. Insbesondere kann das Entstehen einer zündfähigen Atmosphäre für mindestens vier Wochen bei einer Temperatur von 50 °C und Normaldruck ausgeschlossen werden.

Die Verpackung kann eine kunststoffhaltige Verpackung sein, vorzugsweise eine Barriereverpackung. Dadurch können die Batterieteile gasdicht und/oder wasserdicht verpackt werden.

Die Verpackung kann verschweißt sein und/oder eine Vakuumverpackung sein. Dadurch können die Batterieteile besonders gut vor Umwelteinflüssen geschützt werden.

Der Begriff "Batterie" umfasst in dieser Anmeldung sowohl eine nicht wiederaufladbare Batterie als auch eine wiederaufladbare Batterie (genannt auch Akkumulator). Vorzugsweise ist die Batterie eine Lithium-Ionen-Batterie, insbesondere ein Lithium-Ionen-Akkumulator.

Unter einem "Prozessraum" wird in dieser Anmeldung insbesondere ein Raum verstanden, der in einem Betriebsmodus (in verfahrenstechnischer Hinsicht) als einheitlicher Raum (mit einheitlicher Atmosphäre) behandelt werden kann. Vorzugsweise kann dieser Raum (in diesem Betriebsmodus) mit einer einzigen Heizung beheizt und/oder mit einer einzigen Vakuumpumpe evakuiert werden.

Die Erfindung wird nachstehend anhand einer Figurenbeschreibung weiter erläutert.
Fig. 1 zeigt den schematischen Aufbau einer mobilen Vorrichtung.
Fig. 2 zeigt einen Längsschnitt eines Ausschnitts der mobilen Vorrichtung der Fig. 1.

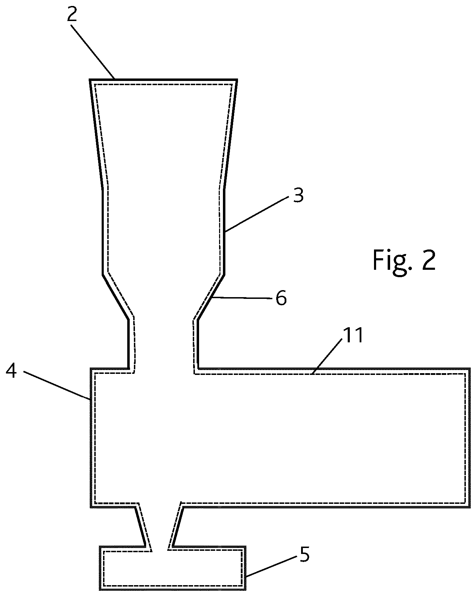

Die in Fig. 1 dargestellte mobile Vorrichtung 1 weist eine Aufgabeeinheit 2, eine Zerkleinerungseinheit 3, eine Trocknungseinheit 4 und eine Verpackungseinheit 5 auf, die im selben Prozessraum 11 (dargestellt in Fig. 2) angeordnet sind. Weiters ist im Prozessraum 11 eine Trennvorrichtung 6 angeordnet, mit der die Aufgabeeinheit 2 und die Zerkleinerungseinheit 3 von der Trocknungseinheit 4 und der Verpackungseinheit 5 getrennt werden können. Die Trennvorrichtung 6 umfasst Stahl als feuerfestes Material und weist eine Klapptür auf (nicht dargestellt). Zur Durchführung des Verfahrens wird im Prozessraum 11 eine Schutzatmosphäre mittels eines fraktionierten Vakuumverfahrens unter Verwendung einer Vakuumpumpe 7 hergestellt. Die Schutzatmosphäre umfasst zumindest 98 Vol% Stickstoff, bezogen auf das Gesamtvolumen der Schutzatmosphäre. Der Stickstoff wird aus dem Behälter 8 über eine erste Einlassöffnung in die Zerkleinerungseinheit 3 und über eine zweite Einlassöffnung in die Trocknungseinheit 4 eingespeist. Ein Wasserpartialdruck der Schutzatmosphäre liegt unter 50 Pa und ein Sauerstoffpartialdruck liegt unter 30 mbar. Eine teilweise entladene Batterie wird der Aufgabeeinheit 2 zugegeben und dann in der Zerkleinerungseinheit 3 mittels einer Rotorschere bei 40 mbar zerkleinert. Während des Zerkleinerns wird die Trocknungseinheit 4 bereits beheizt, sodass aufgrund der Abwärme der Trocknungseinheit 4 auch das Zerkleinern bei einer erhöhten Temperatur von 40 °C oder darüber erfolgt.

Wie Fig. 1 entnehmbar ist, ist die Trocknungseinheit 4 unterhalb der Zerkleinerungseinheit 3 angeordnet, sodass die erhaltenen Batterieteile schwerkraftsbedingt von der Zerkleinerungseinheit 3 in die Trocknungseinheit 4 fallen können. Danach kann der Prozessraum 11 durch Schließen der Klapptür der Trennvorrichtung 6 verkleinert werden, sodass nur noch der Teil des Prozessraums 11 unter Vakuum und erhöhter Temperatur betrieben werden und die Schutzatmosphäre aufrechterhalten werden muss, in welchem die Trocknungseinheit 4 und die Verpackungseinheit 5 angeordnet sind. Die Batterieteile werden in der Trocknungseinheit 4 bei 40 mbar und 150 °C getrocknet, dabei wird ein Gas umfassend einen Elektrolyten abgetrennt und über einen Brüdenfilter 9 aus dem Prozessraum 11 abgezogen. Nach dem Trocknen weisen die Batterieteile einen verbleibenden Anteil des Elektrolyten von unter 0,002 Gew% auf, bezogen auf das Gesamtgewicht der Batterieteile. Die getrockneten Batterieteile werden abschließend in der Verpackungseinheit 5 zu je 25 kg in einer Barriereverpackung verpackt. Während des Verpackens bleiben der Druck und die Schutzatmosphäre im Prozessraum 11 unverändert, beheizt wird aber nicht mehr.

Fig. 1 zeigt weiters, dass das über den Brüdenfilter 9 abgezogene Gas nachfolgend einem Verdampfer 10 zugeführt wird, um den Elektrolyten vom Gas abzutrennen. Dabei wird das Gas auf unter 30 °C abgekühlt. Hierdurch können mehr als 99 Gew% des in der bereitgestellten Batterie enthaltenen Elektrolyten rückgewonnen werden.

Ein Ausschnitt der mobilen Vorrichtung 1 der Fig. 1 ist in Fig. 2 im Längsschnitt dargestellt. Daraus ist ersichtlich, dass die Aufgabeeinheit 2, die Zerkleinerungseinheit 3, die Trocknungseinheit 4 und die Verpackungseinheit 5 im selben Prozessraum 11 (durch eine gestrichelte Linie erkenntlich gemacht) angeordnet sind. Dadurch wird das Verfahren sehr effizient gestaltet, da eine Einstellung von Prozessparametern (z.B. Druck, Temperatur) nur für diesen einen Prozessraum ausreichend ist. Eine Schutzatmosphäre mit einem kontrollierten Druck, einer kontrollierten Temperatur und einer kontrollierten Zusammensetzung kann im ganzen Prozessraum 11 vorgesehen werden, sodass das Verfahren reproduzierbar und sicher durchgeführt werden kann.

## Patentansprüche

1. Verfahren zur Verwertung einer Batterie, umfassend die Schritte
(a) Bereitstellen einer zumindest teilweise entladenen Batterie,
(b) Zerkleinern der zumindest teilweise entladenen Batterie in einem Prozessraum (11), um Batterieteile zu erhalten,
(c) Trocknen der Batterieteile in einem Prozessraum (11), um getrocknete Batterieteile und ein abgetrenntes Gas zu erhalten, und
(d) Verpacken der getrockneten Batterieteile in eine Verpackung,
**dadurch gekennzeichnet, dass** die Schritte (b) und (c) im selben Prozessraum (11) mit einheitlicher Atmosphäre durchgeführt werden wobei im Prozessraum (11) eine Schutzatmosphäre vorgesehen ist, wobei die Schutzatmosphäre zumindest 85 Vol% eines inerten Gases, bezogen auf das Gesamtvolumen der Schutzatmosphäre, umfasst.

2. Verfahren nach Anspruch 1, **dadurch gekennzeichnet, dass** das Trocknen in Schritt (c) bei einem Druck im Prozessraum (11) im Bereich von 10 bis 50 mbar durchgeführt wird.

3. Verfahren nach einem der Ansprüche 1 bis 2, **dadurch gekennzeichnet, dass** beim Trocknen in Schritt (c) eine Vakuumpumpe (7) in einem Hysteresemodus betrieben wird, um ein Vakuum im Prozessraum (11) zu erzeugen.

4. Verfahren nach Anspruch 3, **dadurch gekennzeichnet, dass** die Leistung der Vakuumpumpe (7) im Hysteresemodus zwischen 0 und 60 kW alterniert.

5. Verfahren nach einem der Ansprüche 1 bis 4, **dadurch gekennzeichnet, dass** das Trocknen in Schritt (c) bei einer Temperatur im Bereich von 90 bis 200 °C durchgeführt wird.

6. Verfahren nach einem der Ansprüche 1 bis 5, **dadurch gekennzeichnet, dass** die bereitgestellte Batterie einen Elektrolyten enthält, der im abgetrennten Gas zumindest teilweise enthalten ist, und wobei nach Schritt (c) ein verbleibender Anteil des Elektrolyten in den Batterieteilen bei 0,002 Gew% oder darunter liegt, bezogen auf das Gesamtgewicht der Batterieteile.

7. Verfahren nach einem der Ansprüche 1 bis 6, **dadurch gekennzeichnet, dass** die getrockneten Batterieteile in Schritt (d) zu je 1 bis 30 kg verpackt werden.

8. Verfahren nach einem der Ansprüche 1 bis 7, weiters umfassend Schritt (e): Abtrennen eines Elektrolyten vom abgetrennten Gas.

9. Mobile Vorrichtung (1) zur Verwertung einer Batterie mit dem Verfahren nach einem der Ansprüche 1 bis 8, aufweisend
eine Aufgabeeinheit (2) zum Aufgeben der zumindest teilweise entladenen Batterie,
eine Zerkleinerungseinheit (3) zum Zerkleinern der zumindest teilweise entladenen Batterie,
eine Trocknungseinheit (4) zum Trocknen der Batterieteile, und
eine Verpackungseinheit (5) zum Verpacken der getrockneten Batterieteile,
**dadurch gekennzeichnet, dass** die Zerkleinerungseinheit (3) und die Trocknungseinheit (4) im selben Prozessraum (11) mit einheitlicher Atmosphäre angeordnet sind, wobei im Prozessraum (11) eine Schutzatmosphäre vorgesehen ist, wobei die Schutzatmosphäre zumindest 85 Vol% eines inerten Gases, bezogen auf das Gesamtvolumen der Schutzatmosphäre, umfasst.

10. Mobile Vorrichtung (1) nach Anspruch 9, **dadurch gekennzeichnet, dass** die mobile Vorrichtung (1) eingerichtet ist, in einem Container untergebracht zu werden.

11. Mobile Vorrichtung (1) nach Anspruch 9 oder 10, **dadurch gekennzeichnet, dass** im Prozessraum (11) eine Trennvorrichtung (6) angeordnet ist, die eingerichtet ist, die Aufgabeeinheit (2) und die Zerkleinerungseinheit (3) von der Trocknungseinheit (4) und der Verpackungseinheit (5) zu trennen.

12. Mobile Vorrichtung (1) nach einem der Ansprüche 9 bis 11, **dadurch gekennzeichnet, dass** die Trocknungseinheit (4) in einem Betriebszustand der mobilen Vorrichtung (1) unterhalb von der Zerkleinerungseinheit (3) angeordnet ist.

13. Mobile Vorrichtung (1) nach einem der Ansprüche 9 bis 12, **dadurch gekennzeichnet, dass** die Verpackungseinheit (5) in einem Betriebszustand der mobilen Vorrichtung (1) unterhalb von der Trocknungseinheit (4) angeordnet ist.

14. Verpackung, in welcher 1 bis 30 kg Batterieteile enthalten sind, erhältlich durch ein Verfahren nach einem der Ansprüche 1 bis 8.

## Claims

1. A method of recycling a battery comprising the steps of
(a) providing an at least partially discharged battery,
(b) comminuting the at least partially discharged battery in a process chamber (11) in order to obtain battery parts,
(c) drying the battery parts in a process chamber (11) in order to obtain dried battery parts and a separated gas, and
(d) packaging the dried battery parts into a package,
**characterized in that** steps (b) and (c) are carried out in the same process chamber (11) with a uniform atmosphere, wherein a protective atmosphere is provided in the process chamber (11), wherein the protective atmosphere comprises at least 85 % by volume of an inert gas, based on the total volume of the protective atmosphere.

2. The method according to claim 1, **characterized in that** the drying in step (c) is carried out at a pressure in the process chamber (11) in the range from 10 to 50 mbar.

3. The method according to any one of claims 1 to 2, **characterized in that** during drying in step (c), a vacuum pump (7) is operated in a hysteresis mode in order to generate a vacuum in the process chamber (11).

4. The method according to claim 3, **characterized in that** the power of the vacuum pump (7) alternates between 0 and 60 kW in the hysteresis mode.

5. The method according to any one of claims 1 to 4, **characterized in that** the drying in step (c) is carried out at a temperature in the range of 90 to 200 °C.

6. The method according to any one of claims 1 to 5, **characterized in that** the provided battery contains an electrolyte that is at least partially contained in the separated gas, and wherein after step (c), a remaining electrolyte content in the battery parts is 0.002 % by weight or less, based on the total weight of the battery parts.

7. The method according to any one of claims 1 to 6, **characterized in that** the dried battery parts in step (d) are packaged at 1 to 30 kg each.

8. The method of any one of claims 1 to 7, further comprising step (e): separating an electrolyte from the separated gas.

9. A mobile device (1) for recycling a battery with the method according to any one of claims 1 to 8, comprising
a loading unit (2) for loading the at least partially discharged battery,
a comminuting unit (3) for comminuting the at least partially discharged battery,
a drying unit (4) for drying the battery parts, and
a packaging unit (5) for packaging the dried battery parts,
**characterized in that** the comminuting unit (3) and the drying unit (4) are arranged in the same process chamber (11) with a uniform atmosphere, wherein a protective atmosphere is provided in the process chamber (11), wherein the protective atmosphere comprises at least 85 % by volume of an inert gas, based on the total volume of the protective atmosphere.

10. The mobile device (1) according to claim 9, **characterized in that** the mobile device (1) is configured to be accommodated in a container.

11. The mobile device (1) according to claim 9 or 10, **characterized in that** a separating device (6) is arranged in the process chamber (11), the separating device (6) being configured to separate the loading unit (2) and the comminuting unit (3) from the drying unit (4) and the packaging unit (5).

12. The mobile device (1) according to any one of claims 9 to 11, **characterized in that**, in an operating state of the mobile device (1), the drying unit (4) is arranged below the comminuting unit (3).

13. The mobile device (1) according to any one of claims 9 to 12, **characterized in that**, in an operating state of the mobile device (1), the packaging unit (5) is arranged below the drying unit (4).

14. A package containing 1 to 30 kg of battery parts, obtainable by a method according to any one of claims 1 to 8.

## Revendications

1. Procédé de valorisation d'une batterie, comprenant les étapes
(a) mise à disposition d'une batterie au moins partiellement déchargée,
(b) broyage de la batterie au moins partiellement déchargée dans un espace de traitement (11), pour obtenir des pièces de batterie,
(c) séchage des pièces de batterie dans un espace de traitement (11), pour obtenir des pièces de batterie séchées et un gaz séparé, et
(d) emballage des pièces de batterie séchées dans un emballage,
**caractérisé en ce que** les étapes (b) et (c) sont réalisées dans le même espace de traitement (11) avec une atmosphère uniforme, une atmosphère protectrice étant prévue dans l'espace de traitement (11), l'atmosphère protectrice comprenant au moins 85% en volume d'un gaz inerte, par rapport au volume total de l'atmosphère protectrice.

2. Procédé selon la revendication 1, **caractérisé en ce que** le séchage à l'étape (c) est réalisé à une pression dans l'espace de traitement (11) dans la plage de 10 à 50 mbar.

3. Procédé selon l'une des revendications 1 à 2, **caractérisé en ce que** lors du séchage à l'étape (c), une pompe à vide (7) est exploitée en mode d'hystérésis pour créer un vide dans l'espace de traitement (11).

4. Procédé selon la revendication 3, **caractérisé en ce que** la puissance de la pompe à vide (7) en mode d'hystérésis alterne entre 0 et 60 kW.

5. Procédé selon l'une des revendications 1 à 4, **caractérisé en ce que** le séchage à l'étape (c) est réalisé à une température dans la plage de 90 à 200°C.

6. Procédé selon l'une des revendications 1 à 5, **caractérisé en ce que** la batterie mise à disposition contient un électrolyte, qui est au moins partiellement contenu dans le gaz séparé, et dans lequel, après l'étape (c), une proportion restante de l'électrolyte dans les pièces de batterie est de 0,002 % en poids ou moins, par rapport au poids total des pièces de batterie.

7. Procédé selon l'une des revendications 1 à 6, **caractérisé en ce que** les pièces de batterie séchées à l'étape (d) sont emballées par lots de 1 à 30 kg.

8. Procédé selon l'une des revendications 1 à 7, comprenant en outre l'étape (e) : séparation d'un électrolyte du gaz séparé.

9. Dispositif mobile (1) de valorisation d'une batterie avec le procédé selon l'une des revendications 1 à 8, comportant
une unité d'alimentation (2) pour l'alimentation de la batterie au moins partiellement déchargée,
une unité de broyage (3) pour le broyage de la batterie au moins partiellement déchargée,
une unité de séchage (4) pour le séchage des pièces de batterie, et
une unité d'emballage (5) pour l'emballage des pièces de batterie séchées,
**caractérisé en ce que** l'unité de broyage (3) et l'unité de séchage (4) sont disposées dans le même espace de traitement (11) avec une atmosphère uniforme, une atmosphère protectrice étant prévue dans l'espace de traitement (11), l'atmosphère protectrice comprenant au moins 85 % en volume d'un gaz inerte, par rapport au volume total de l'atmosphère protectrice.

10. Dispositif mobile (1) selon la revendication 9, **caractérisé en ce que** le dispositif mobile (1) est agencé pour être logé dans un conteneur.

11. Dispositif mobile (1) selon la revendication 9 ou 10, **caractérisé en ce que** dans l'espace de traitement (11) est disposé un dispositif de séparation (6), qui est agencé pour séparer l'unité d'alimentation (2) et l'unité de broyage (3) de l'unité de séchage (4) et de l'unité d'emballage (5).

12. Dispositif mobile (1) selon l'une des revendications 9 à 11, **caractérisé en ce que** l'unité de séchage (4), dans un état de fonctionnement du dispositif mobile (1), est disposée en dessous de l'unité de broyage (3).

13. Dispositif mobile (1) selon l'une des revendications 9 à 12, **caractérisé en ce que** l'unité d'emballage (5), dans un état de fonctionnement du dispositif mobile (1), est disposée en dessous de l'unité de séchage (4).

14. Emballage, dans lequel 1 à 30 kg de pièces de batterie sont contenus, susceptible d'être obtenu par un procédé selon l'une des revendications 1 à 8.
